Europäisches Patentamt

European Patent Office

Office européen des brevets

(19)

(11) Publication number: **0 085 138**
**A2**

# EUROPEAN PATENT APPLICATION

(12)

(21) Application number: **82109181.6**

(22) Date of filing: **05.10.82**

(51) Int. Cl.³: **G 11 B 5/84**
**B 05 D 3/12**

(30) Priority: **28.01.82 US 343601**

(43) Date of publication of application:
**10.08.83 Bulletin 83/32**

(84) Designated Contracting States:
**DE FR GB**

(71) Applicant: **International Business Machines
Corporation
Old Orchard Road
Armonk, N.Y. 10504(US)**

(72) Inventor: **Crump, Danny Spurgeon
2060 Santa Rosa Drive
Hollister California 95023(US)**

(72) Inventor: **Gentrup, Myron Henry
1538 Altamont Avenue
San Jose California 95125(US)**

(72) Inventor: **Hale, William Floyd
3490 Blue Grass Court
Morgan Hill California 95037(US)**

(72) Inventor: **Lorenz, Max Rudolph
5819 Antigua Drive
San Jose California 95120(US)**

(74) Representative: **Chaudhry, Mohammad Saeed
IBM United Kingdom Patent Operations Hursley Park
Winchester Hants, S021 2JN(GB)**

(54) A method of forming a magnetic coating on a substrate.

(57) This invention is directed to a method of forming a magnetic coating on a substrate. Ultrasonic energy is applied to a liquid coating formulation containing magnetic and nonmagnetic particles and intended for application to the substrate to form a magnetic recording layer. The ultrasonic energy breaks up agglomerations of the particles to give better particle dispersion in the coating formulation, thereby resulting in improved magnetic characteristics of the magnetic recording layer. The ultrasonic energy is applied to the coating formulation until it is ready to be applied to the substrate, to reduce any tendency of the particles to reagglomerate.

## A METHOD OF FORMING A MAGNETIC COATING ON A SUBSTRATE

This invention relates to a method of forming a magnetic coating on a substrate.

In the application of a liquid magnetic material to a substrate, as typified for example in the spin coating of a magnetic coating onto a disk substrate, to form a magnetic recording disk, magnetic particles are dispersed in a suitable liquid binder system to form a coating mixture which is applied in liquid form to the substrate surface. Because magnetic particles, when free to move, lower their potential energy by agglomerating into packets or clumps, the coating mixture usually is subjected to a treatment prior to application, such as ball milling, in an effort to break up the agglomerations and uniformly disperse the magnetic particles in the binder system. However, even after such treatment, it has been found that such agglomeration occurs and that the resultant finished magnetic coating contains a large amount of agglomerated magnetic particles. Additionally, the ball milling treatment itself may generate non-magnetic particles called ball mill debris which will enter the liquid coating mixture and tend to agglomerate. Because the magnetic performance characteristics of the finished magnetic disk are known to improve with better dispersion of the magnetic particles in the coating, it is highly desirable to obtain as good a dispersion of the magnetic (and nonmagnetic) particles as possible.

As is well known, the use of ultrasonic energy has been proposed for a number of applications. Typical patents showing the use of ultrasonic energy to reduce the viscosity of a liquid magnetic printing composition prior to its application to a print medium are U.S. 3,649,358, 4,046,073 and 4,005,435. However, none of these references are directed to the reduction or elimination of agglomerations of magnetic particles in a liquid magnetic coating composition.

According to the invention there is provided a method of forming a magnetic coating on a substrate, which comprises preparing a formulation

SA9-81-035                     1

containing magnetic and nonmagnetic particles, characterised in that the method comprises the steps of circulating said coating formulation through a circulation system, supplying ultrasonic energy to said circulating coating formulation to break up agglomerations of said particles and applying said ultrasonically treated coating formulation to the substrate, said ultrasonic energy being supplied to said coating formulation until it is ready to be applied to said substrate, to reduce .ny tendency of said particles to reagglomerate.

In accordance with the present invention, a liquid containing magnetic particles and intended to form a magnetic recording layer on a suitable substrate is subjected to treatment by ultrasonic energy to better disperse the magnetic particles in the liquid coating by breaking up agglomerations of such particles, and the liquid is then applied to a substrate before the dispersed particles can reagglomerate. Preferably, prior to application to the substrate, the liquid is continuously circulated through an ultrasonic flow-cell which provides the ultrasonic energy to the liquid. This ultrasonic energy treatment is continued for a suitable length of time and the liquid coating material may then be dispensed for application to the substrate. It has been found that this ultrasonic treatment results in an improvement in a number of important magnetic properties of the finished coating. These properties are missing bits, extra bits, envelope errors, magnetic orientation, and coercivity and signal amplitude. Most current magnetic disk coatings have a magnetic field applied thereto shortly after the application of the coating material to the substrate in an effort to magnetically align or orient the magnetic particles in a desired direction. The magnetic orientation ratio of such coatings is defined as the ratio of the number of magnetic particles which achieve and retain such alignment to the number of those magnetic particles which do not.

It has also been found that the present invention results in a recuction of agglomeration of nonmagnetic particles in the liquid coating material, such particles being introduced either intentionally as by the addition of particles such as $Al_2O_3$ which provide a load-bearing function in the coating, as disclosed for example in U.S. Reissue patent

35                                           2

28,866, or inadvertently as by generation of ball mill debris particles during ball milling of the liquid coating mixture. The reduction of agglomerations of these nonmagnetic particles is an important consideration since they tend to produce magnetic anomolies, such as missing bits, in the finished coating which can detract from the magnetic performance of the disk.

The invention will now be described by way of example with reference to the accompanying drawings in which:-

FIGS. 1 and 2 are graphs showing the variations in orientation ratio and coercivity, respectively, as a function of the time of application of ultrasonic energy to test samples of liquid coating material containing magnetic particles; and

FIGS. 3 and 4 are graphs showing the variations in coercivity and signal amplitude, respectively, as a function of the number of passes or cycles through an ultrasonic energy cell of test samples of liquid coating material containing magnetic particles.

The invention was carried out using a commercial liquid disk coating formulation comprising a mixture of epoxy and phenolic resins, solvents for the resins, magnetic particles of gamma $Fe_2O_3$ and $Al_2O_3$ particles. The particular magnetic particles employed were gamma $Fe_2O_3$, but the invention would be equally effective with other types of magnetic particles, such as cobalt-doped $Fe_2O_3$ or chromium dioxide. This mixture was first ball milled for 48 hours to thoroughly disperse the particles in the mixture and to attempt to break up agglomerations of such particles. After ball milling, the mixture was circulated through a system including a paddle stirrer and an ultrasonic flow-through cell. The paddle stirrer was of a conventional type in which a paddle continuously stirs the mixture in a pot in the circulation system.

The number of passes necessary through the ultrasonic flow-through cell depends on the energy available in the ultrasonic flow-through cell, the flow-through volume per unit time, temperature and frequency. The conditions used in one particular test of the present invention were:

| | |
|---|---|
| Total mixture volume | 4 gallons |
| Frequency of ultrasonic energy | 33 Khz |
| Power of ultrasonic energy source | 350 watts |
| Temperature | 85°F |
| Flow rate | 130 cc/min |
| Coating fluid pressure | 15 psi |
| Total ultrasonic treatment time | 5.5 hours |

At the end of the 5.5 hours, the coating mixture was passed through the ultrasonic flow-through cell to the nozzle of a coating dispenser, and 8 inch disk substrates were spin coated in the standard way, as disclosed for example in U.S. Patent 3,198,657. After spin coating on the substrate, the applied coating was subjected to a magnetic orienting field and the coating was then cured and buffed to obtain a magnetic coating of the desired thickness. The disks were then washed and lubricated by conventional processes to prepare them for testing, including testing for missing bits, extra bits and envelope errors.

A common method of testing for missing bits is to record a known bit pattern on a disk surface and then read it back to determine if any of the recorded bits do not appear. This test is usually performed at different clip levels for the detected bits, expressed as a percentage. The higher percentage the clip level, the larger the number of missing bits.

Extra bits can be measured by applying to a disk surface an erasing magnetic field which should totally erase any bits on the surface. Any magnetic bits subsequently detected on that surface are considered spurious or extra. Different clip levels for detected bits are also used in this test, with the number of extra bits increasing as the clip level is lowered.

Envelope errors can be described as occurring when adjacent magnetic bits have a 30% or more difference in amplitude, the number of such errors being expressed in terms of 30% modulation (MOD 30%).

The disks fabricated in accordance with this invention were tested for missing bits, extra bits and envelope errors, and compared with commercial disks employing the same magnetic coating composition but which had not been subjected to ultrasonic treatment. The results of this testing on a number of disks are given below in Table I.

## TABLE I

### Disks with Ultrasonic Treatment of Liquid Coating

| No. | Extra Bit Clip Levels | | | | Missing Bit Clip Levels | | | | Disk MOD |
|---|---|---|---|---|---|---|---|---|---|
| | 28% | 30% | 32% | 34% | 70% | 65% | 60% | 55% | 30% |
| 1 | 8 | 2 | 0 | 1 | 54 | 29 | 23 | 20 | 43 |
| 2 | 6 | 1 | 1 | 0 | 40 | 28 | 21 | 12 | 9 |
| 3 | 7 | 3 | 1 | 0 | 70 | 51 | 46 | 39 | 48 |
| 4 | 8 | 1 | 1 | 0 | 83 | 59 | 49 | 43 | 65 |
| 5 | 12 | 6 | 5 | 4 | 68 | 52 | 39 | 32 | 41 |
| 6 | 4 | 0 | 0 | 0 | 56 | 37 | 27 | 25 | 27 |
| 7 | 8 | 4 | 3 | 1 | 95 | 64 | 54 | 43 | 59 |
| 8 | 8 | 0 | 0 | 0 | 78 | 47 | 42 | 42 | 58 |
| 9 | 18 | 8 | 5 | 5 | 99 | 64 | 47 | 30 | 39 |
| 10 | 11 | 3 | 1 | 1 | 60 | 37 | 27 | 21 | 25 |
| x | 9.0 | 2.8 | 1.7 | 1.2 | 70.3 | 46.9 | 37.5 | 30.7 | 41.4 |
| σ | 3.9 | 2.6 | 1.9 | 1.8 | 18.7 | 13.5 | 12.0 | 11.0 | 17.4 |

### Disks without Ultrasonic Treatment

| | Extra Bit Clip Levels | Missing Bit Clip Levels | MOD |
|---|---|---|---|
| | 33% | 65% | 30% |
| 1 | 148 | 98 | 116 |
| 2 | 96 | 35 | 52 |
| 3 | 197 | 168 | 260 |
| 4 | 132 | 76 | 56 |
| 5 | 159 | 102 | 105 |
| x | 146 | 95.3 | 118.5 |
| σ | 427 | 55.8 | 97.5 |

It can be seen from Table I that the number of missing bit errors for disks made in accordance with this invention is about one half the number of such errors for the control disks, and that the number of extra bit errors is reduced by a factor of 100. This improvement in missing bit performance is probably due in large part to the fact that the treatment of this invention disperses the nonmagnetic particles in the coating to prevent the accumulation of such nonmagnetic particles in a given bit cell space. Further, Table I shows that the number of envelope errors in the disks of this invention is decreased by a factor of almost 3 relative to the control disks.

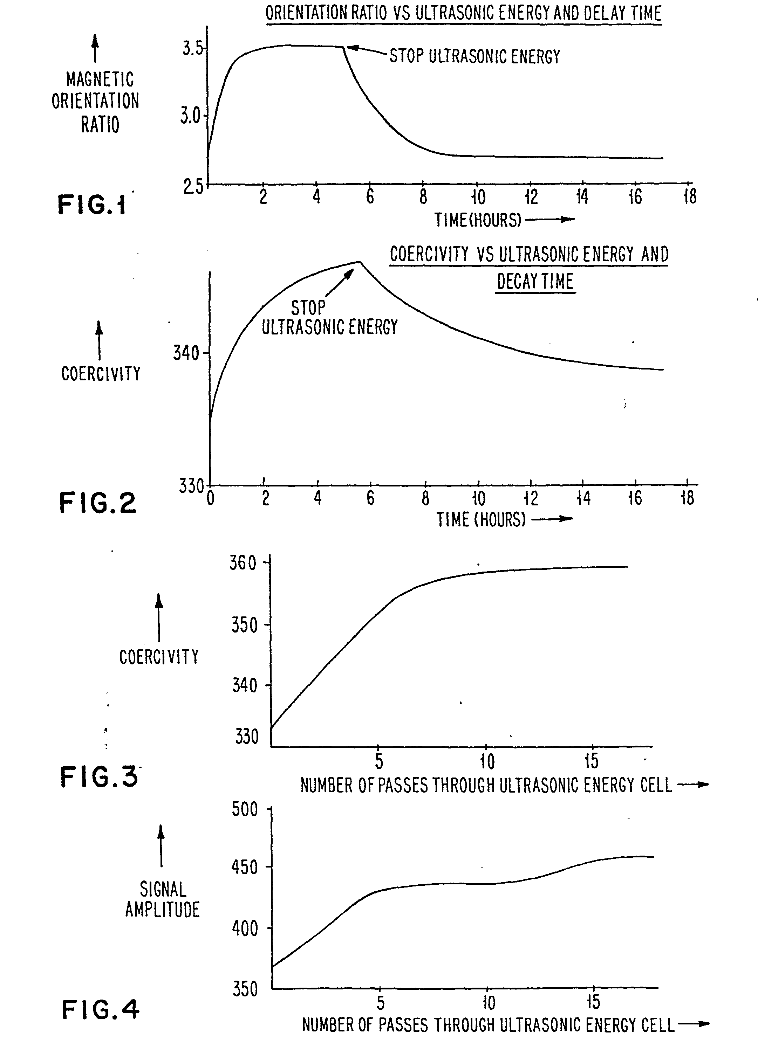

As indicated above, the process of the present invention also results in significant improvements in the magnetic orientation ratio and coercivity of the finished disks, both of which parameters are important to the magnetic performance of the disk. FIG. 1 is a plot of the orientation ratio of a magnetic disk coating liquid as a function of the length of time of application of ultrasonic energy to the liquid. The data for the graph of FIG. 1 was obtained by periodically obtaining a sample of the liquid, orienting the sample in a magnet for 10 minutes, drying or curing the sample, and then measuring the orientation ratio of the cured sample using a vibrating sample magnetometer (VSM). It can be seen from FIG. 1 that the orientation ratio of the magnetic particles increases as a function of the time of application of the ultrasonic energy, and that it reaches its high value and then approximately levels off. FIG. 1 also shows the effect on this orientation ratio of the removal of the ultrasonic energy. After approximately 5 hours, the ultrasonic energy was removed and the coating was still stirred while more measurements were made of the orientation ratio. It can be seen from FIG. 1 that the orientation ratio decreased in value and ultimately returned to approximately its original value after about 17 hours from the start of the test.

FIG. 2 shows the effects of the process of the present invention in increasing the coercivity of a magnetic coating composition as a function of time, as well as the decay in this improvement after stopping the application of ultrasonic energy. The coercivity of the samples was measured using the same technique described above in connection with orientation ratio measurements. FIG. 2 shows the coercivity increasing with time while ultrasonic energy is applied to the circulating coating mixture and then decreasing when the ultrasonic energy application is stopped, the final coercivity, however, remaining at a value higher than its original value.

In another experiment, a volume of one quart of liquid magnetic coating identical to that used in the experiment described above was circulated a number of times through a 350 watt ultrasonic energy source having a frequency of 33 Khz at a flow rate of 300 cc/min, each pass through the system taking approximately 2 minutes. The resulting improvements in coercivity and signal amplitude as a function of the number of passes through the system are shown in the graphs of FIGS. 3 and 4, respectively. As with the data in FIGS. 1 and 2, it can be seen from FIGS. 3 and 4 that significant improvements in both coercivity and signal amplitude are produced by the technique of the present invention.

From the above, it can be seen that the process of the present invention provides significant increases in the values of a number of parameters defining magnetic disk performance, and that it represents an important contribution to the art of magnetic disk manufacturing.

CLAIMS

1.    A method of forming a magnetic coating on a substrate, which comprises preparing a formulation containing magnetic and nonmagnetic particles, characterised in that the method comprises the steps of circulating said coating formulation through a circulation system, supplying ultrasonic energy to said circulating coating formulation to break up agglomerations of said particles and applying said ultrasonically treated coating formulation to the substrate, said ultrasonic energy being supplied to said coating formulation until it is ready to be applied to said substrate, to reduce any tendency of said particles to reagglomerate.

2.    A method as claimed in claim 1 including the step of continuously stirring said liquid coating formulation in said circulating system during application of said ultrasonic energy.

3.    A method as claimed in claim 1 or 2, in which said ultrasonic energy is applied to said circulating liquid coating formulation for a period of up to 5 hours.

4.    A method as claimed in any one of claims 1 to 3, including the step of ball milling said liquid coating formulation prior to the application thereto of said ultrasonic energy in said circulating system.

5.    A method as claimed in any one of the preceding claims, in which said ultrasonically treated coating formulation is applied to said substrate by spin coating.

6.    A method as claimed in any one of the preceding claims, in which said magnetic particles are gamma $Fe_2O_3$ and said nonmagnetic particles include $Al_2O_3$ particles.

7. A method as claimed in any one of the preceding claims, 1 in which said ultrasonic treatment is being applied at the time of application to the substrate.

1 / 1

0085138

**FIG.1** ORIENTATION RATIO VS ULTRASONIC ENERGY AND DELAY TIME

MAGNETIC ORIENTATION RATIO

STOP ULTRASONIC ENERGY

TIME (HOURS)

**FIG.2** COERCIVITY VS ULTRASONIC ENERGY AND DECAY TIME

COERCIVITY

STOP ULTRASONIC ENERGY

TIME (HOURS)

**FIG.3**

COERCIVITY

NUMBER OF PASSES THROUGH ULTRASONIC ENERGY CELL

**FIG.4**

SIGNAL AMPLITUDE

NUMBER OF PASSES THROUGH ULTRASONIC ENERGY CELL